# EUROPEAN PATENT APPLICATION

(11) **EP 1 355 488 A2**
(43) Date of publication of application: **22.10.2003**
(21) Application number: 03252314.4
(22) Date of filing: 11.04.2003
(51) Int. Cl.: H04N 5/232

(54) **Image recording apparatus**

(30) Priority: 16.04.2002 KR 2002020537
(71) Applicant: SAMSUNG ELECTRONICS CO., LTD., Suwon-City, Kyungki-do (KR)
(72) Inventor: Iizuka, Hiroshi 517-1604 Shinnamoosil Jugong, Paldal-gu, Suwon-city, Gyunggi-do (KR); Oguro, Masaki, Suwon-city, Gyunggi-do (KR)
(74) Representative: Geary, Stuart Lloyd

(57) **Abstract**

An image recording apparatus is capable of updating a driving program by using a portable storage medium. The image recording apparatus includes a shooting unit (100) shooting and taking images of an object, a recording unit (500) recording the images of the object taken by the shooting unit (100), a communication module (200) capable of mutually communicating with an external communication terminal, a reading unit (600) removably connectible to an external storage medium that stores a driving program enabling the mutual communication between the communication module (200) and the external communication terminal, the reading unit (600) reading the driving program from the external storage medium, a control unit (300) controlling the communication module (200) based on the driving program read by the reading unit (600), wherein the communication module (200) performs the mutual communication with the external communication terminal and a storage unit (400) storing the driving program read by the reading unit (600) from the external recording medium. The control unit (300) controls the communication module (200) to perform the mutual communication with the communication terminal using the driving program stored in the storage unit (400). As a result, addition and deletion of function of the image recording apparatus becomes possible even after the assembling process.

## Description

The present invention relates to an image recording apparatus, comprising wireless communication means and control means.

In general, conventional digital camcorders have the functions of video cameras, which capture the image of an object, and of video recorders, which record the image of the object. An operator of such a digital camcorder can capture images of an object and record the captured images on a recording medium, such as a magnetic tape or a memory stick. Furthermore, the operator can check the images of the object by reproducing the images from the recording medium. Such reproduced images are displayed through a liquid crystal display or a viewfinder attached to the digital camcorder. The reproduced images can also be checked by connecting the digital camcorder with an external display device, such as a television. The advantage of the digital camcorder is that it is a portable image capturing device, which is easy to use and can capture the image of a desired object in any place, namely, outside, at a concert, etc.

Conventional digital camcorders are assembled with all the required modules for performing the respective functions being mounted in the digital camcorder, with a memory containing driver programs therein for driving the modules mounted in the camcorder. Accordingly, the functions of the respective modules are limited to the functions stored in the memory at the time of the initial assembling process of the digital camcorder. In other words, no additions or deletions of the functions are allowed once the camcorder is assembled. A digital camcorder having a remote wireless communication function will be taken as an example to explain this more clearly. The digital camcorder having the remote wireless communication function is mounted with a Bluetooth module, which is the remote wireless communication module. Furthermore, driver software, which drives the Bluetooth module so as to enable remote wireless communication, is stored in the built-in memory. For example, firmware, a profile, an application program interface (API) and an application can be stored in the memory as driver software.

Generally, the driver programs being installed at the time of assembling the digital camcorder are compatible and are interoperable with other existing products. The problem is that the digital camcorder assembled as above is often incompatible with new products to be manufactured. For example, a digital camcorder that is designed with a driver program to communicate with a wireless terminal at 10 metres cannot communicate with newer wireless technology that provides the ability to communicate with the wireless terminal at a distance of 100m.

An image recording apparatus, according to the present invention, is characterised by interface means for releasably receiving storage means, and said control means being configured to read data via the interface means and to control the operation of the wireless communication means in accordance with data read via the interface means.

Preferably, said data is a driver program.

Preferably, the wireless communication means is capable of transmitting image data.

Preferably, the wireless communication means is configured to operate according to the Bluetooth protocol.

Preferably, the interface means is configured for releasably receiving a solid state memory module.

Preferably, the apparatus comprises internal memory means, the control means being configured to copy said data to the internal memory means.

Embodiments of the present invention will now be described, by way of example, with reference to the accompanying drawings, in which:
Figure 1 is a block diagram showing a digital camcorder according to the present invention;
Figure 2 is a block diagram showing the reading unit of Figure 1 in greater detail;
Figure 3 is a block diagram showing the image-capturing unit of Figure 1 in greater detail;
Figure 4 is a block diagram showing the recording portion of Figure 1; and
Figure 5 is a block diagram showing the image converter and the input/output unit of Figure 1 in greater detail.

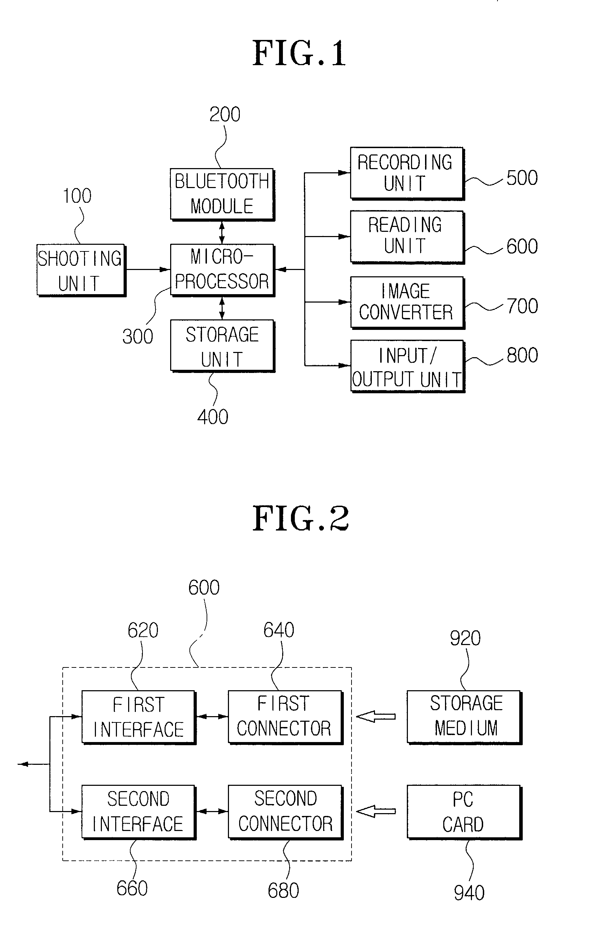

Referring to Figure 1, the digital camcorder includes an image-capturing unit (or shooting unit) 100, a microprocessor 300, a recording unit 500, an image converter 700 and an input/output unit 800.

The image-capturing unit 100 captures images of an object through a lens (not shown), and converts the captured images into a format recordable on a recording medium. The microprocessor 300 outputs the images captured by the image-capturing unit 100 to the recording unit 500. The recording unit 500 records the images on a recording medium such as a magnetic tape. The image converter 700 converts the captured images into a format displayable on an external display device (not shown) connected to the input/output unit 800. The input/output unit 800 outputs the images in the converted format from the image converter 700 to the external display device.

In one embodiment of the present invention, the digital camcorder includes a Bluetooth module 200, a reading unit 600 and a storage unit 400. The Bluetooth module 200 performs mutual communication with the external remote wireless communication terminal in accordance with the control signal of the microprocessor 300. The reading unit 600 is removably connected to an external storage medium (not shown), which stores a driver program for performing mutual communication between the Bluetooth module 200 and the external communication terminal, and reads the driver program from the external storage medium. Examples of the external storage medium include a memory stick and a smart media card.

The reading unit 600 transmits the read driver program to the microprocessor 300. Accordingly, the microprocessor 300 controls the Bluetooth module 200 to communicate with the external communication terminal based on the driver program transmitted from the reading unit 600. The storage unit 400 stores the driver program read from the reading unit 600 in accordance with the control signal of the microprocessor 300. Accordingly, the microprocessor 300 controls the Bluetooth module 200 to communicate with the external communication terminal using the driver program stored in the storage unit 400.

As the Bluetooth module 200 and the external communication terminal perform mutual communication therebetween, the recording unit 500 records the data transmitted from the external communication terminal to the Bluetooth module 200 on the recording medium, which may be, for example, a magnetic tape or a memory.

As described above, the driver program for the mutual communication with the external communication terminal through the Bluetooth module 200 is stored in the external storage medium. Accordingly, as necessary, the storage medium is connected to the reading unit 600, and the driver program is read to control the Bluetooth module 200. As a result, addition and deletion of functions in order to update the driver program after assembly of the digital camcorder becomes easier.

Referring to Figure 2, the reading unit 600 includes a first interface 620, a first connector 640, a second interface 660 and a second connector 680.

The first interface 620 reads the data from the storage medium 920 that is removably connected to the first connector 640 and transmits the read data to the microprocessor 300. In one embodiment of the present invention, the first interface 620 reads the driver program for operating the Bluetooth module 200 from the storage medium 920 that is connected to the first connector 640. The second interface 660 receives the data from a PC card 940 of a computer (not shown) removably connected to the second connector 680.

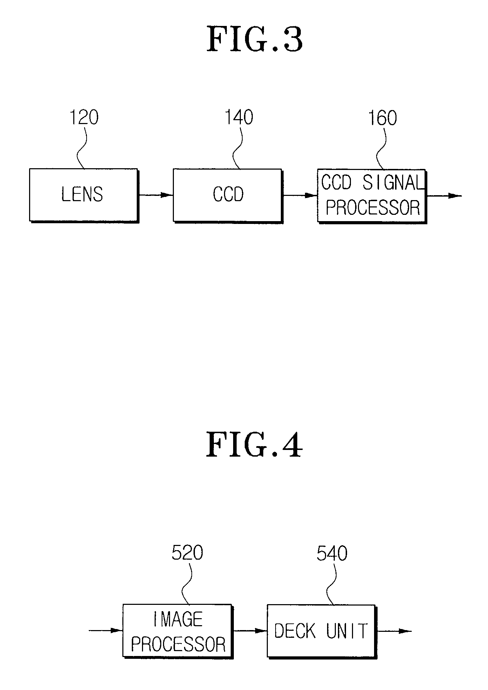

Referring to Figure 3, the image-capturing unit 100 includes a lens 120, a charge coupled device (CCD) 140 and a CCD signal processor 160. The lens 120 is for forming images of an object. The CCD 140 captures the images of the object formed by the lens 120 and transmits the captured images. The CCD signal processor 160 converts the images provided from the CCD 140 into an electrical signal.

Referring to Figure 4, the recording unit 500 includes an image processor 520 and a deck unit 540. The image processor 520 converts the electrical signal converted at the CCD signal processor 160 into a format recordable on a recording medium. The deck unit 540 records the signal, which is converted to the recordable format, on a recording medium such as a magnetic tape inserted in the deck (not shown).

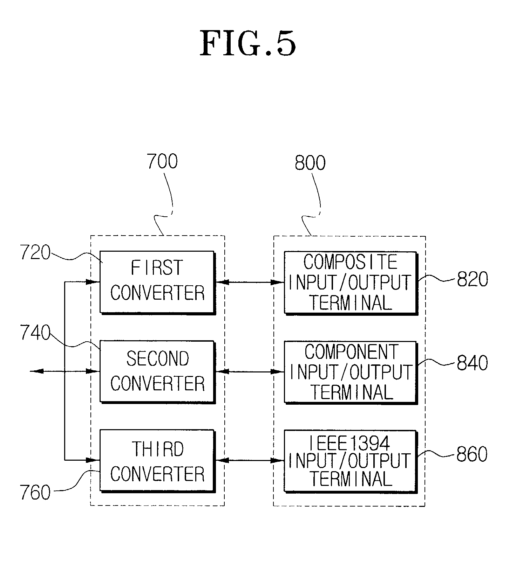

Referring to Figure 5, the image converter 700 includes a first converter 720, a second converter 740 and a third converter 760. The input/output unit 800 includes a composite input/output terminal 820, a component input/output terminal 840 and an IEEE1394 input/output terminal 860. The first converter 720 converts the incoming image signals into composite signals outputted to the composite input/output terminal 820. The second converter 740 converts the incoming image signals into component signals outputted to the component input/output terminal 840. The third converter 760 converts the incoming image signals into digital video signals outputted to the IEEE1394 input/output terminal 860.

According to the present invention, a driver program for conducting mutual communication with the external communication terminal through the Bluetooth module is stored in an external storage medium. The external storage medium is connected to the reading unit, which reads the driver program. Accordingly, the mutual communication is conducted with the external communication terminal through the Bluetooth module based on such a read driver program. As a result, addition and deletion of the functions of the digital camcorder can be enabled easily even after the assembly of the digital camcorder.

The present invention has other embodiments. For example, the communication module may be another type of transceiver (that transmits and receives analogue or digital signals), such as, for example, a wireless LAN card or communication module that utilizes IEEE 802.11 protocols, an industrial, scientific, and medical (ISM) microwave band radio device, or a HomeRF communication device.

## Claims

1. An image recording apparatus, comprising wireless communication means (200) and control means (300), **characterised by** interface means (600) for releasably receiving storage means, and said control means (300) being configured to read data via the interface means (600) and to control the operation of the wireless communication means (200) in accordance with data read via the interface means (600).

2. An apparatus according to claim 1, wherein said data is a driver program.

3. An apparatus according to claim 1 or 2, wherein the wireless communication means (200) is capable of transmitting image data.

4. An apparatus according to claim 1, 2 or 3, wherein the wireless communication means (200) is configured to operate according to the Bluetooth protocol.

5. An apparatus according to claim 1, 2, 3, or 4, wherein the interface means (600) is configured for releasably receiving a solid state memory module.

6. An apparatus according to any preceding claim, comprising internal memory means (400), the control means (300) being configured to copy said data to the internal memory means (400).

7. An image recording apparatus, comprising:
a shooting unit shooting images of an object;
a recording unit recording the images of the object taken by the shooting unit;
a communication module mutually communicating with an external communication terminal;
a reading unit removably connectible to an external storage medium that stores a driving program performing the mutual communication between the communication module and the external communication terminal, the reading unit reading the driving program from the external storage medium; and
a control unit controlling the communication module based on the driving program read by the reading unit, wherein the communication module performs the mutual communication with the external communication terminal.

8. The image recording apparatus of claim 7, further comprising a storage unit storing the driving program read by the reading unit from the external recording medium, wherein the control unit controls the communication module to perform the mutual communication with the communication terminal using the driving program stored in the storage unit.

9. The image recording apparatus of claim 8 further comprising an internal storage medium, wherein the recording unit stores predetermined data on the internal storage medium, the predetermined data being received by the communication module from the external communication terminal.

10. The image recording apparatus of claim 9, wherein the internal storage medium comprises a magnetic tape.

11. The image recording apparatus of claim 10, wherein the communication module comprises a wireless communication module.

12. The image recording apparatus of claim 11, wherein the wireless communication module comprises a remote wireless communication module.

13. The image recording apparatus of claim 12, wherein the remote wireless communication module comprises a bluetooth module.

14. The image recording apparatus of claim 13, wherein the external storage medium comprises a portable recording medium.

15. The image recording apparatus of claim 14, wherein the portable storage medium comprises a smart media card or a memory stick.

16. A digital camcorder, comprising:
a shooting unit taking images of an object;
a recording unit recording the images of the object taken by the shooting unit, the recording unit recording the images in a digital format;
a communication module mutually communicating with an external communication terminal;
a reading unit removably connectible to an external storage medium that stores a driving program performing the mutual communication between the communication module and the external communication terminal, the reading unit reading the driving program from the external storage medium; and
a control unit controlling the communication module based on the driving program read by the reading unit, wherein the communication module performs the mutual communication with the external communication terminal.

17. The digital camcorder of claim 16, further comprising a storage unit storing the driving program read by the reading unit from the external recording medium, wherein the control unit controls the communication module to perform the mutual communication with the communication terminal using the driving program stored in the storage unit.

18. The digital camcorder of claim 17 further comprising an internal storage medium, wherein the recording unit stores predetermined data on the internal storage medium, the predetermined data being received by the communication module from the external communication terminal.

19. The digital camcorder of claim 18, wherein the internal storage medium comprises a magnetic tape.

20. The digital camcorder of claim 19, wherein the communication module comprises a wireless communication module.

21. The digital camcorder of claim 20, wherein the wireless communication module comprises a remote wireless communication module.

22. The digital camcorder of claim 21, wherein the remote wireless communication module comprises a bluetooth module.

23. The digital camcorder of claim 22, wherein the external storage medium comprises a portable recording medium.

24. The digital camcorder of claim 23, wherein the portable storage medium comprises a smart media card or a memory stick.

25. A recording apparatus, comprising:
a video camera capturing images of a viewed object and recording the images;
a transceiver communicating with a remote wireless terminal; and
an internal storage medium storing a driving program driving the transceiver, the driving program and/or driving program updates being received by the internal storage medium by downloading the driving program and/or the driving program updates from an external storage medium.

26. The recording apparatus of claim 25, wherein the video camera comprises:
a shooting unit capturing the images; and
a recording unit recording the images.

27. The recording apparatus of claim 26, wherein the shooting unit comprises:
a lens operable to produce the images;
a charge coupled device accumulating the images; and
a charge coupled device signal processor converting the accumulated images into an electrical signal transmitted to the recording unit.

28. The apparatus of claim 26, wherein the recording unit comprises:
an image processor converting the electrical signal into a format recordable in the recording unit; and
a deck unit recording the converted electrical signal in the recording unit.

29. The recording apparatus of claim 25, wherein the images comprise still images.

30. The recording apparatus of claim 25, wherein the images comprise moving images.

31. The recording apparatus of claim 25, further comprising:
a reading unit reading the driving program and/or reading driving program updates from the external storage medium.

32. The recording apparatus of claim 25, further comprising:
a control unit controlling operation of the apparatus according to instructions provided by the driving program and/or the driving program updates.

33. The apparatus of claim 25, further comprising:
an image converter converting the images into a format displayable on a display device; and
an input/output unit connected to the image converter and connectible to the display device.

34. The apparatus of claim 33, wherein:
the image converter comprises:
a first converter converting the images into composite signals;
a second converter converting the images into composite signals; and
a third converter converting the images into digital video signals; and the input/output unit comprises:
a composite input/output terminal connected to the first converter;
a component input/output terminal connected to the second converter; and
an IEEE 1394 input/output terminal connected to the third converter.

35. The recording apparatus of claim 25, further comprising an audio recording unit.

36. A recording apparatus, comprising:
a video camera recording moving images;
a communication module operable to communicate with a remote wireless communication terminal; and
a control unit controlling the communication module according to instructions provided by a driving program, wherein the driving program is updated by connecting the recording apparatus to an external storage medium.

37. A method of controlling communication between a video camera and a remote wireless communications terminal, comprising:
connecting an external storage medium to the video camera;
downloading a driving program and/or a driving program update from the external storage medium; and
controlling the communication between the video camera and the remote wireless communications terminal according to instructions from the driving program and/or the driving program update.

38. A recording apparatus, comprising:
a video camera capturing images of a viewed object and recording the images; and
a transceiver controlled by a driving program to communicate with a remote wireless terminal, the driving program being received and/or updated by connecting the recording apparatus to an external storage medium.

39. A recording apparatus, comprising:
a video camera recording moving images;
a transceiver communicating with a wireless terminal; and a driving program driving the transceiver, wherein the driving program is received and/or updated by connecting the recording apparatus to an external storage medium.
